# EUROPÄISCHE PATENTANMELDUNG

(11) **EP 1 126 742 A1**
(43) Veröffentlichungstag der Anmeldung: **22.08.2001**
(21) Anmeldenummer: 00103083.2
(22) Anmeldetag: 15.02.2000
(51) Int. Cl.: H04Q 11/04

(54) **Verfahren zum Ersatzschalten von Übertragungseinrichtungen in MPLS-Netzen**

(71) Anmelder: SIEMENS AKTIENGESELLSCHAFT, 80333 München (DE)
(72) Erfinder: Klink, Joachim, Dipl.-Ing., 81377 München (DE)

(57) **Zusammenfassung**

Die Ersatzschaltung von MPLS-Paketen birgt beim Stand der Technik das Problem, daß die Übertragung von MPLS-Paketen unidirektional definiert ist. Das erfindungsgemäße Verfahren schafft hier Abhilfe, indem eine Konfiguration vorgesehen ist, mit der sowohl eine bidirektionale als auch eine 1:n unidirektionale Übertragung (wofür auch ein Rückkanal benötigt wird) realisiert wird. Ferner lassen sich Ersatzschaltungen im Fehlerfall hierdurch bei Störung auf einer Betriebsstrecke nach Maßgabe von Prioritätskriterien und MPLS-Verbindungsinformationen effizient handhaben.

## Beschreibung

Die Erfindung betrifft ein Verfahren gemäß dem Oberbegriff des Patentanspruchs 1.

Ein Verfahren zum Ersatzschalten von Übertragungseinrichtungen ist bereits aus der deutschen Patentschrift DE 196 46 016 C2 bekannt.

Dieses bekannte Verfahren bezieht sich auf Übertragungseinrichtungen, über die Informationen nach einem asynchronen Transfermodus (ATM) geleitet werden. Hierbei ist eine Übertragungseinrichtung zur bidirektionalen Übertragung von Digitalsignalen vorgesehen, bei der zwei als Endstellen fungierende Vermittlungseinrichtungen über eine Mehrzahl von Betriebsstrecken und eine Ersatzstrecke miteinander verbunden sind. Die beiden Endstellen enthalten jeweils eine Überwachungsvorrichtung zur Feststellung von Übertragungsstörungen. Eine durch die Überwachungsvorrichtung steuerbare Schaltvorrichtung verbindet eine Empfangsvorrichtung in einen ersten Schaltzustand mit der Betriebsstrecke und in einem zweiten Schaltzustand mit der Ersatzstrecke.

Nachteilig an diesem bekannten Verfahren ist, daß es sich ausschließlich auf ATM-Übertragungseinrichtungen bezieht. Im Internet werden Informationen über eine Mehrzahl von Netzknoten, die als Router ausgebildet sein können, dem empfangenden Teilnehmer zugeführt. Zwischen den Routern können MPLS-Netze angeordnet sein. MPLS-Netze sind aber in dem bekannten Verfahren nicht angeprochen.

Der Erfindung liegt die Aufgabe zugrunde, ein Verfahren der eingangs genannten Art derart weiterzubilden, daß auch im Internet Informationen mit großer Sicherheit über eine Mehrzahl von Netzknoten übertragen werden können.

Die Erfindung wird ausgehend von den im Oberbegriff des Patentanspruchs 1 angegebenen Merkmale durch dessen kennzeichnende Merkmale gelöst.

Vorteilhaft an der Erfindung ist insbesondere, daß zwei gegenläufige unidirektionale MPLS-Verbindungen logisch miteinander derart assoziiert werden, daß die beiden gegenläufigen MPLS-Verbindungen jeweils die gleichen Vermittlungseinrichtungen verbinden. Somit kann sowohl eine bidirektionale Übertragung als auch eine 1:n unidirektionale Übertragung (wofür auch ein Rückkanal benötigt wird) realisiert werden. Ferner wird lediglich eine Ersatzstrecke vorgesehen, die einer Mehrzahl von Betriebsstrecken zugeordnet ist. Über diese Ersatzstrecke werden die MPLS-Pakete der gestörten Betriebstrecke nach Maßgabe von Prioritätskriterien weitergeleitet. Die Durchschaltung durch die empfangende Vermittlungseinrichtung erfolgt dann unter zu Hilfenahme einer MPLS-Verbindungsnummer. Damit ist der Vorteil verbunden, daß die MPLS-Verbindung im Fehlerfall aufrechterhalten werden kann.

Vorteilhafte Weiterbildungen der Erfindung sind in den Unteransprüchen anggegeben.

Die Erfindung wird im folgenden anhand eines Ausführungsbeispiels näher erläutert.

Es zeigen:
- Figur 1: ein in das Internet eingebundenes MPLS-Netz,
- Figur 2: das erfindungsgemäße Verfahren zur bidirektionalen Übertragung von MPLS-Paketen in einer 1:n-Struktur,
- Figur 3: eine spezielle Ausgestaltung des erfindungsgemäßen Verfahrens in einer 1:1-Struktur,
- Figur 4: eine weitere spezielle Ausgestaltung des erfindungsgemäßen Verfahrens in einer 1+1-Struktur.
- Figur 5: die verwendeten Prioritäten, nach deren Maßgabe die Ersatzschaltung erfolgt.

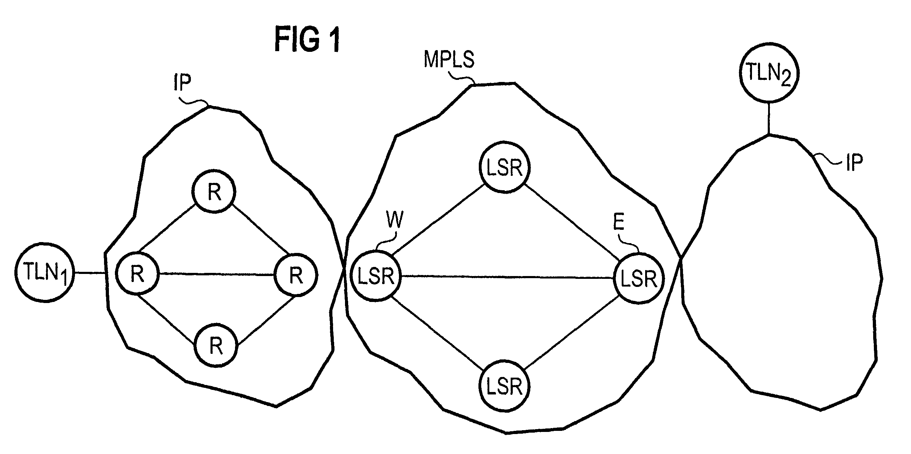

In Fig. 1 ist beispielhaft aufgezeigt, wie Informationen ausgehend von einem Teilnehmer TLN1 einem Teilnehmer TLN2 zugeführt werden. Der sendende Teilnehmer TLN1 ist dabei an das Internet-Netz IP angeschlossen, durch das die Informationen nach einem Internetprotokoll wie z.B. das IP-Protokoll geleitet werden. Dieses Protokoll ist kein verbindungsorientiertes Protokoll. Das Internet-Netz IP weist eine Mehrzahl von Routern R auf, die untereinander vermascht sein können. Der empfangende Teilnehmer TLN2 ist an ein weiteres Internet-Netz IP angeschlossen. Zwischen den beiden Internet-Netzen IP ist ein MPLS-Netz (Multiprotocol Packet Label Switching) eingefügt, durch das Informationen in Form von MPLS-Paketen verbindungsorientiert durchgeschaltet werden. Dieses Netz weist eine Mehrzahl von miteinander vermaschten Routern auf. In einem MPLS-Netz können dies sogenannte Label Switched Router (LSR) sein. Einer der Router ist als sendende Einrichtung W und ein weiterer als empfangende Einrichtung E bezeichnet.

MPLS-Pakete weisen jeweils einen Kopfteil sowie einen Informationsteil auf. Der Kopfteil dient der Aufnahme von Verbindungsinformation während der Informationsteil der Aufnahme von Nutzinformation dienlich ist. Als Nutzinformation werden IP-Pakete verwendet. Die im Kopfteil enthaltene Verbindungsinformation ist als MPLS-Verbindungsnummer ausgebildet. Diese hat aber lediglich im MPLS-Netz Gültigkeit. Wenn somit ein IP-Paket vom Internet-Netz IP in das MPLS-Netz eindringt, wird diesem der im MPLS-Netz gültige Kopfteil angehängt. Darin sind alle Verbindungsinformationen enthalten, die den Weg des MPLS-Paketes im MPLS-Netz vorgeben. Verläßt das MPLS-Paket das MPLS-Netz, wird der Kopfteil wieder entfernt und das IP-Paket im sich daran anschließenden Internet-Netz IP nach Maßgabe des IP-Protokolls weitergeroutet.

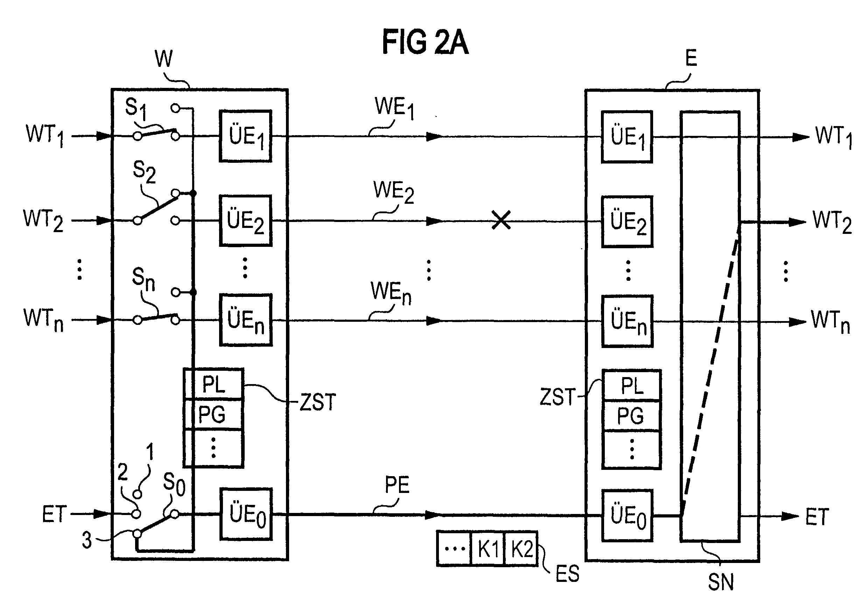

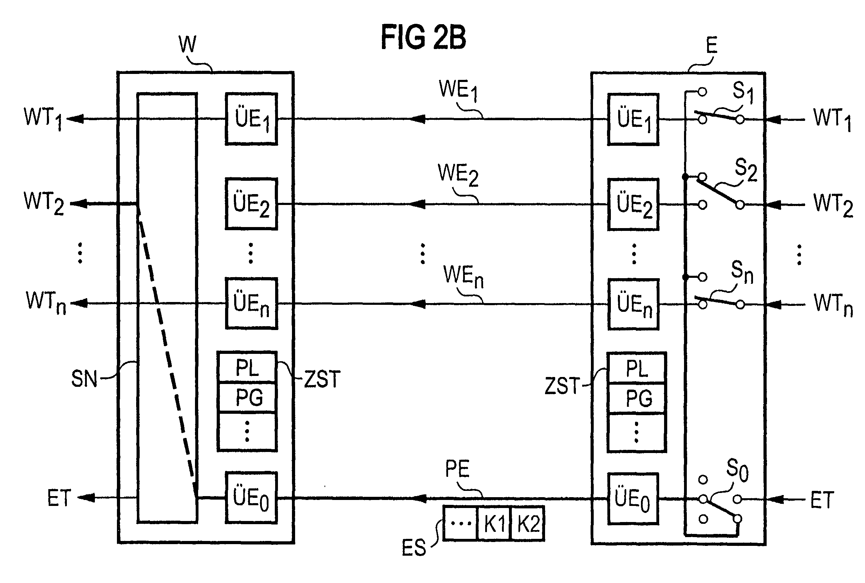

In Fig. 2 sind beispielshaft zwei Knoten eines MPLS-Netzes aufgezeigt, welche jeweils als Vermittlungseinrichtung W, E ausgebildet sind. In vorliegendem Ausführungsbeispiel wird davon ausgegangen, daß es sich bei diesen Vermittlungseinrichtungen um MPLS Cross Connect Vermittlungseinrichtungen handelt. Die Verwendung derart ausgebildeter Vermittlungseinrichtungen bedeutet jedoch keine Einschränkung der Erfindung, andere Vermittlungseinrichtungen wie z.B. ATM-Vermittlungseinrichtungen sind ebenso verwendbar. In Fig. 2 sollen nun MPLS-Pakete (Multiprotocol Label Switched Packets) von der als Label Switched Router W ausgebildeten Vermittlungseinrichtung zu der als Label Switched Router E ausgebildeten Vermittlungseinrichtung hin übertragen werden.

In Fig. 2a ist die Übertragung von MPLS-Paketen von dem Label Switched Router W zu dem Label Switched Router E hin aufgezeigt, während in Fig. 2b die Rückrichtung dieser Verbindung offenbart ist. Die Figuren 2a und 2b stellen zusammen eine bidirektionale Anordnung dar. Definitionsgemäß sind jedoch für MPLS-Netze Verbindungen grundsätzlich nur unidirektional definiert. Eine bidirektionale Anordnung wird erreicht, indem zwei gegenläufige unidirektionale MPLS-Verbindungen (LSPs; label switched paths) logisch miteinander assoziert werden. Hierbei muß vorausgesetzt werden, daß die beiden gegenläufigen Verbindungen jeweils die gleichen Vermittlungseinrichtungen (z. B. W und E in Figur 2a und 2b oder auch weitere, dazwischen liegende Vermittlungseinrichtungen) verbinden. Dies ist beim Aufbau der beiden Verbindungen sicherzustellen.

MPLS-Pakete weisen jeweils einen Kopfteil sowie einen Informationsteil auf. Der Kopfteil dient der Aufnahme von Verbindungsinformation während der Informationsteil der Aufnahme von Nutzinformation dienlich ist. Als Nutzinformation werden IP-Pakete verwendet. Die im Kopfteil enthaltene Verbindungsinformation ist als MPLS-Verbindungsnummer ausgebildet. Diese hat aber lediglich im MPLS-Netz Gültigkeit. Wenn somit ein IP-Packet vom Internet-Netz IP in das MPLS-Netz eindringt, wird diesem der im MPLS-Netz gültige Kopfteil angehängt. Darin sind alle Verbindungsinformationen enthalten, die den Weg des MPLS-Paketes im MPLS-Netz vorgeben. Verläßt das MPLS-Paket das MPLS-Netz, wird der Kopfteil wieder entfernt und das IP-Paket im sich daran anschließenden Internet-Netz IP nach Maßgabe des IP-Protokolls weitergeroutet.

Die Label Switched Router W, E sind über Betriebsstrecken WE₁...WEₙ (WORKING ENTITY) sowie lediglich eine Ersatzstrecke PE (PROTECTION ENTITY) miteinander verbunden. Weiterhin sind Schalteinrichtungen S₀...Sₙ (BRIDGE) aufgezeigt, über die die ankommenden MPLS-Pakete und die zugeordneten Betriebsstrecken WE₁...WEₙ zum Label Switched Router E hin übertragen werden. Weiterhin sind Fig. 2 Selektionseinrichtungen SN entnehmbar, deren Aufgabe darin besteht, die über die Betriebsstrecken WE₁...WEₙ übertragenen MPLS-Pakete dem Ausgang des Label Switched Routers E zuzuführen. Gemäß vorliegendem Ausführungsbeispiel sind die Selektionseinrichtungen SN als Koppelfeld ausgebildet. Das Koppelfeld SN ist sowohl im Label Switched Router W als auch im Label Switched Router E angeordnet.

Weiterhin sind in beiden Label Switched Router W, E Überwachungsvorrichtungen ÜE₀...ÜEₙ (PROTECTION DOMAIN SINK, PROTECTION DOMAIN SOURCE) aufgezeigt, die den Zustand bzw. die Qualität der über die Betriebstrecken WE₁...WEₙ übertragenen MPLS-Pakete überwachen. Beispielsweise werden die MPLS-Pakete der Verbindung mit der Nummer 1 WT₁ bevor sie über die Betriebsstrecke WE₁ zum Label Switched Router E hin übertragen werden, in der Überwachungseinrichtung ÜE₁ des Label Switched Routers W mit Steuerinformation versehen, die die Überwachungseinrichtung ÜE₁ des empfangenden Label Switched Routers E entnimmt und überprüft. Anhand dieser Steuerinformation kann dann ermittelt werden, ob die Übertragung des MPLS-Paketes korrekt erfolgt ist oder nicht. Insbesondere kann hier ein Totalausfall (SIGNAL FAIL FOR WORKING ENTITY) einer der Betriebsstrecken WE₁...WEₙ ermittelt werden. Ebenso sind aber auch unter Verwendung bekannter Verfahren Verschlechterungen in der Übertragungsqualität (SIGNAL DEGRADE) ermittelbar.

Die Überwachungsvorrichtungen ÜE₁...ÜEₙ schließen die Betriebsstrecken WE₁...WEₙ auf beiden Seiten ab. Weitere Überwachungsvorrichtungen ÜE₀ sind auf beiden Enden der Ersatzstrecke PE angeordnet. Diese soll im Fehlerfall als Übertragungsstrecke für die außer Betrieb genommene Betriebsstrecke WE_{X} dienen. Weiterhin werden hierüber Ersatzschalteprotokolle ES übertragen, so daß die Intaktheit der Ersatzstrecke oberste Priorität hat.

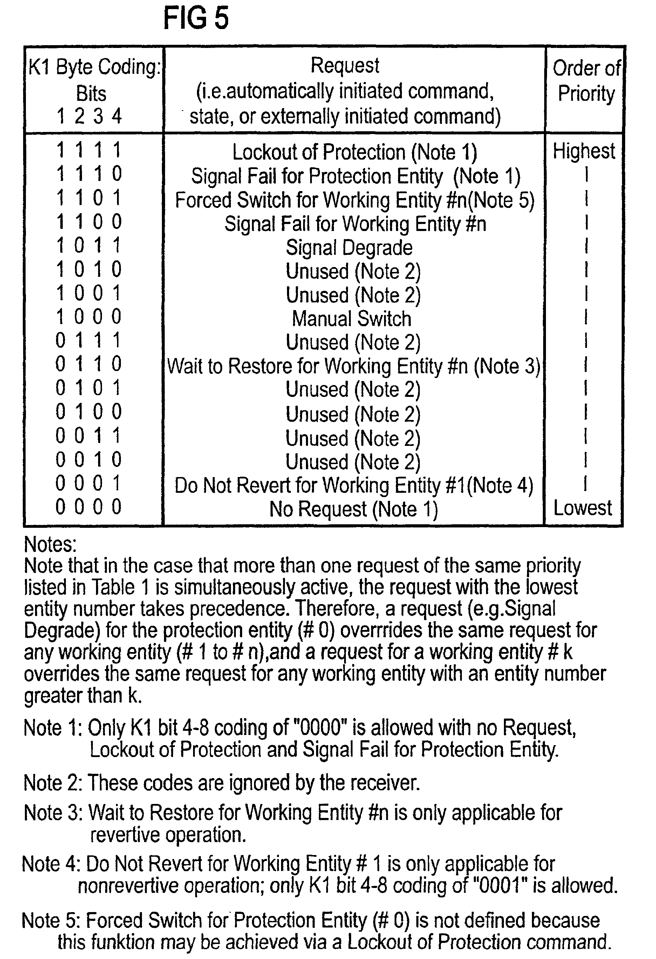

In jeder der Label Switched Router W, E sind ferner zentrale Steuereinrichtungen ZST angeordnet. Diese beinhalten jeweils Prioritätstabellen PG, PL. Bei den Prioritätstabellen PL handelt es sich um lokale Prioritätstabellen, in denen Zustand und Priorität des lokalen Label Switched Routers W abgespeichert ist. Bei den Prioritätstabellen PG handelt es sich um globale Prioritätstabellen, die Zustand und Priorität des lokalen sowie des verbleibenden Label Switched Routers E führen. Durch die Einführung der Prioritäten wird erreicht, daß beim gleichzeitigen Auftreten mehrerer Ersatzschalteanforderungen festgelegt ist, welche Betriebstrecke ersatzzuschalten ist. Ebenso sind in den Prioritätstabellen die Ersatzschalteanforderungen priorisiert. So besteht beispielsweise eine hochpriore Anforderung von einem Anwender. Da dieser Ersatzschalteanforderung eine hohe Priorität zugewiesen ist, wird sie somit bevorzugt gesteuert. Eine von einer der Betriebsstrecken gesteuerte Ersatzschalteanforderung, der eine niedrigere Priorität zugewiesen ist, wird somit zurückgewiesen. Die einzelnen Prioritäten sind in Fig. 5 aufgezeigt.

Die zentralen Steuereinrichtungen ZST der Label Switched Router W, E tauschen Informationen in einem Ersatzschalteprotokoll ES aus. Dieses Protokoll wird über die Ersatzstrecke PE übertragen und von der zugeordneten Überwachungseinrichtung ÜE₀ des jeweils empfangenden Label Switched Routers entnommen, und der betreffenden zentralen Steuereinrichtung ZST zugeführt. Weiterhin wird in der zentralen Steuervorrichtung ZST dafür Sorge getragen, daß im Fehlerfall die Schaltvorrichtungen S₀...Sₙ in entsprechender Weise gesteuert werden.

Im Protokoll ES sind Informationen K1, K2 abgelegt. Bei ersteren handelt es sich um Informationen bezüglich der generierten Ersatzschalteanforderung, während es sich bei den letzteren um Informationen bezüglich der momentanen Zustände der Schalteinrichtungen handelt. Das Protokoll ES wird jeweils bei Generierung einer Ersatzschalteanforderung zwischen den beiden Label Switched Router W, E ausgetauscht. In einer speziellen Ausgestaltung der Erfindung wird vorgesehen, das Protokoll ES zyklisch zwischen beiden Label Switched Routern W, E zu übertragen.

Im folgenden wird nun die Durchführung des erfindungsgemäßen Verfahrens anhand Fig. 2 näher erläutert. Wie bereits erläutert zeigt Fig. 2a die Übertragung der MPLS-Pakete vom Label Switched Router W zum Label Switched Router E über die Betriebsstrecken WE₁ ... WEₙ und Fig. 2b ist die zugehörige Gegenrichtung (bidirektionale Übertragung). Es wird nun zunächst davon ausgegangen, daß die Betriebstrecken WE₁...WEₙ noch intakt sind und die ankommenden MPLS-Pakete korrekt übertragen.
Die MPLS-Pakete gehören einer Vielzahl von Verbindungen WT₁.. ..WTₙ an. Die einzelnen Verbindungen werden anhand der im Paketkopf der MPLS-Pakete eingetragenen MPLS Verbindungsnummer unterschieden.

Die Schalteinrichtungen S₁...Sₙ des Label Switched Routers W sind in diesem (noch intakten) Betriebsfall derart geschaltet, daß die MPLS-Pakete den Überwachungseinrichtungen ÜE₁... ÜEₙ unmittelbar zugeführt werden. In letzteren werden die MPLS-Pakete mit den bereits angesprochenen Steuerinformationen beaufschlagt und über die in Frage kommende Betriebsstrecke WE₁...WEₙ den Überwachungseinrichtungen ÜE₁... ÜEₙ des empfangenden Label Switched Routers E zugeführt. Dort wird die mitgeführte Steuerinformation überprüft und gegebenenfalls ein Fehlerfall ermittelt. Ist die Übertragung korrekt erfolgt, werden die MPLS-Pakete dem Koppelfeld SN zugeführt. Hier wird die MPLS Verbindungsinformation ausgewertet und nach Maßgabe dieser Auswertung das MPLS-Paket über dem in Frage kommenden Ausgang des Koppelfeldes SN in das sich anschließende Netz weitergeleitet.

Die Ersatzstrecke PE kann während dieser Zeit ungenutzt bleiben. Gegebenenfalls können aber auch während dieser Zeit Sonderdaten (EXTRA TRAFFIC) dem Label Switched Router E zugeführt werden. Die Schaltvorrichtung S₀ des Label Switched Routers W nimmt in diesem Fall die Stellung 2 ein (Fig. 2a). Die Übertragung der Sonderdaten erfolgt ebenfalls in MPLS-Paketen. Die Überwachungseinrichtung ÜE₀ des Label Switched Routers W beaufschlagt diese Sonderdaten führenden MPLS-Pakete in gleicher Weise mit Steuerinformationen wie dies im Falle der über die Betriebsstrecken WE₁...WEₙ bereits geschildert wurde.

Als Sonderdaten kann über die Ersatzstrecke auch niederpriorer Verkehr übertragen werden, der nur dann im Netz übertragen wird, wenn ausreichend Ressourcen vorhanden sind. Der niederpriore Verkehr wird dann in diesem Fall durch Ersatzschalten des hochprioren Verkehrs automatisch verdrängt. In diesem Fall erfolgt die Verdrängung der Sonderdaten im Ersatzschaltefall nicht durch Umschalten der Schaltvorrichtung Sₒ in Figur 2, sondern durch Priorisierung des hochprioren Verkehrs gegenüber den niederprioren Sonderdaten in jeder Übertragungseinrichtung.

Im folgenden wird nun davon ausgegangen, daß die Betriebsstrecke WE₂ ausgefallen ist. Dies wird von der dieser zugeordneten Überwachungseinrichtung ÜE₂ des empfangenden Label Switched Routers E ermittelt. Die Ersatzschalteanforderung Kl wird nun zur betreffenden zentralen Steuereinrichtung ZST übermittelt und dort in der lokalen Prioritätstabelle PL sowie der globalen Prioritätstabelle PG abgelegt. Nach Maßgabe der in der globalen Prioritätstabelle PG abgespeicherten Prioritäten wird nun ermittelt, ob noch höher priore Anforderungen anstehen. Dies könnte beispielsweise die bereits angesprochene Umschalteanforderung des Anwenders (FORCED SWITCH FOR WORKING ENTITY) sein. Auch bei gleichzeitigem Auftreten anderer Störungsfalle wie beispielsweise der Betriebsstrecke WE₁ wäre die Ersatzschaltung dieser Betriebsstrecke bevorzugt zu behandeln, da dieser Betriebsstrecke eine höhere Prioität zugewiesen ist. In diesem Fall wird eine höher priorisierte Anforderung zuerst behandelt. Die in der lokalen und globalen Prioritätstabelle PL, PG gespeicherten Prioritäten sind in Fig. 5 aufgezeigt.

Sind keine höher priorisierte Anforderungen vorhanden, wird die Schaltvorrichtung S₂ des Label Switched Routers E in den verbleibenden Betriebszustand gesteuert, wie in Fig. 2b aufgezeigt. Im folgenden wird nun das Ersatzschalteprotokoll ES über die Ersatzstrecke PE dem Label Switched Router W zugeführt. In diesem Ersatzschalteprotokoll sind die bereits angesprochenen Informationen K1 und K2 enthalten. Wesentlich ist, daß die lokale Prioritätslogik die Ausgestaltung der Information K1 definiert, und die globale Prioritätslogik die Stellung der Schaltvorrichtung S₀.

Von der Überwachungseinrichtung ÜE₀ des Label Switched Routers W wird nun das Ersatzschalteprotokoll ES übernommen und der hier angeordneten zentralen Steuereinrichtung ZST zugeführt. Liegen auch hier in der globalen Prioritätstabelle PG keine weiteren höherpriorisierten Anforderungen an, so wird auch hier die Schaltvorrichtung S₂ in entsprechender Weise angesteuert und eingestellt. Weiterhin wird die Schaltvorrichtung S₀ des Label Switched Routers W ebenfalls umgelegt. Der neue Status der beiden Schaltvorrichtungen S₀, S₂ wird dem Label Switched Router E quittiert, und in der dortigen globalen Prioritätstabelle PG aktualisiert. Die MPLS-Pakete der Verbindung WT₂ werden somit über die Ersatzstrecke PE dem Label Switched Router E zugeführt.

Die Selektionseinrichtung SN des empfangenden Label Switched Routers E ist als Koppelfeld ausgebildet. Die über die Ersatzstrecke PE geleiteten MPLS-Pakete werden diesem Koppelfeld zugeführt. Hier wird nun die MPLS-Verbindungsnummer ("Label value") dem Paketkopf entnommen, ausgewertet und durch das Koppelfeld durchgeroutet. Das Ansteuern von Schalteinrichtungen entfällt somit in diesem Fall. Da es sich bei diesen Verbindungen um eine bidirektionale Verbindung handelt, muß auch für die Übertragung der MPLS-Pakete der Rückwärtsrichtung Sorge getragen werden. Dies erfolgt gemäß Fig. 2b in gleicher Weise, wie soeben für die Übertragung der MPLS-Pakete von dem Label Switched Router W zum Label Switched Router E hin geschildert wurde.

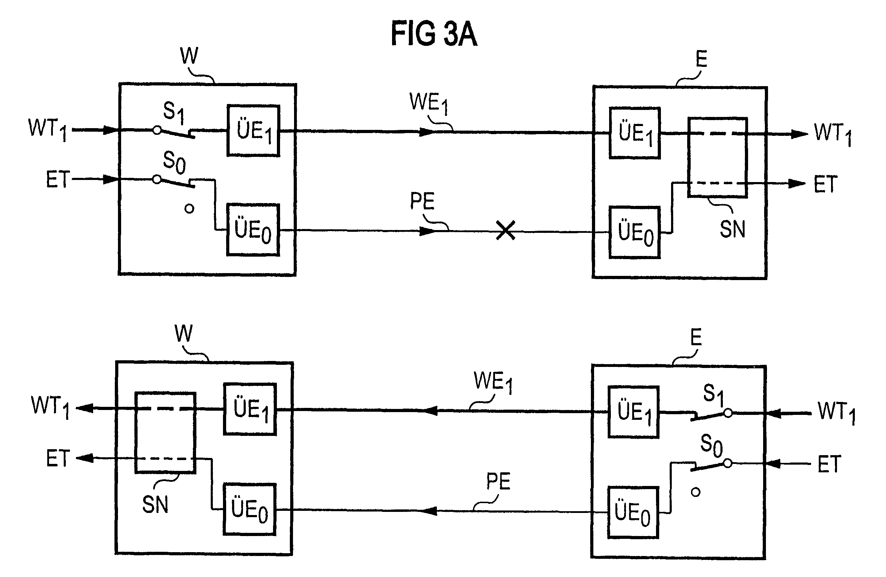

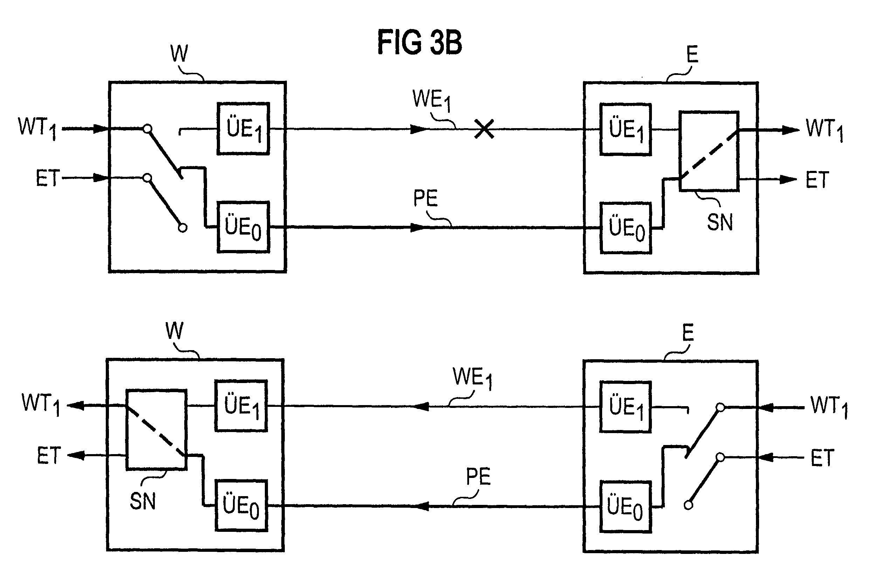

Gemäß dem soeben beschriebenen Ausführungsbeispiel wurde von einer 1:n Struktur ausgegangen. Dies bedeutet, daß für n Betriebsstrecken lediglich eine Ersatzstrecke zur Verfügung steht. Ein Spezialfall ist also dann gegeben, wenn n=1 gilt. In diesem Fall wird also eine 1:1 Struktur verwendet. Die entsprechenden Verhältnisse sind in Fig. 3 aufgezeigt.

Auch in diesem Fall ist die Selektionseinrichtung als Koppelfeld ausgebildet, so daß ein Durchschalten nach Maßgabe der MPLS-Verbindungsnummer erfolgt. In den Vermittlungseinrichtungen gemäß Fig. 3 sind ebenso - nicht aufgezeigte - zentrale Steuereinrichtungen mit lokalen und globalen Prioritätstabellen enthalten.

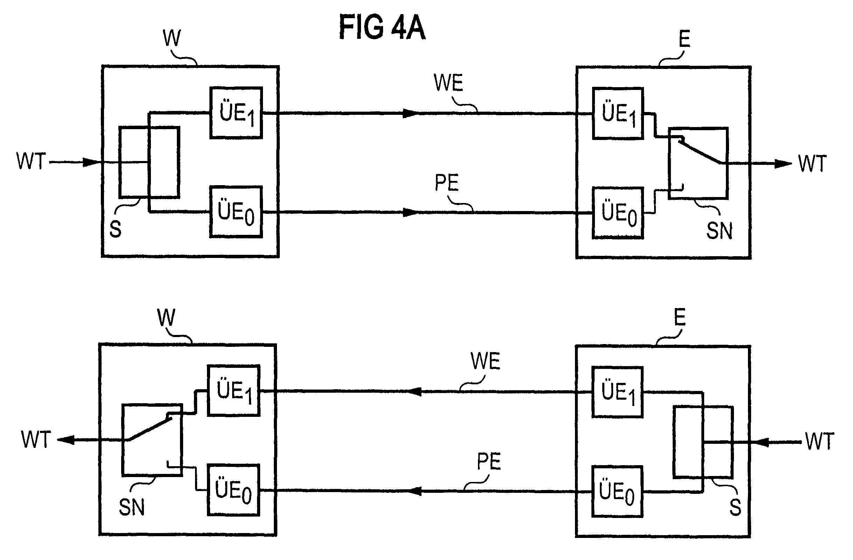

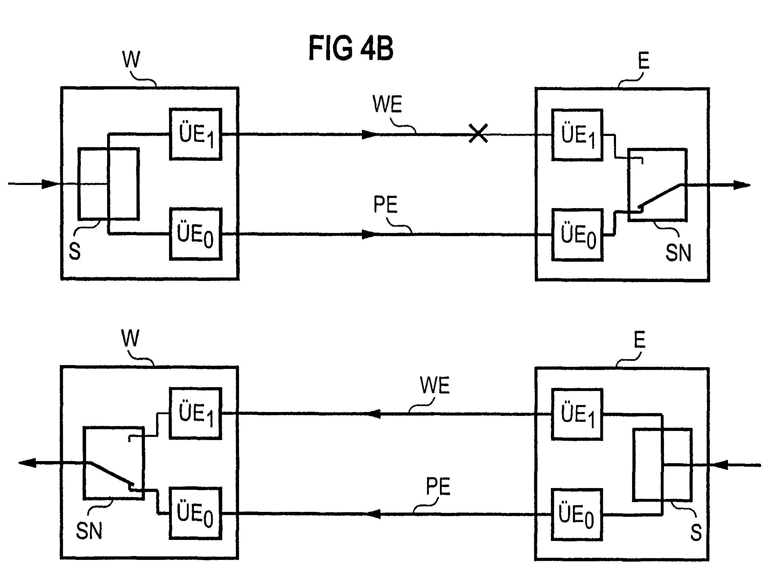

Eine weitere Ausgestaltung der Erfindung ist in Fig. 4 aufgezeigt. Dabei handelt es sich um eine 1+1 Struktur. Diese Struktur ergibt sich aus der 1:n Struktur, indem die Schaltvorrichtungen S fest eingestellt werden und nicht mehr über die zentralen Steuervorrichtungen ZST steuerbar sind. Damit werden die MPLS-Pakete auch im störungsfreien Betriebsfall sowohl über die Betriebsstrecke WE als auch die Ersatzstrecke PE geleitet. Die Selektionseinrichtung SN ist hier nicht als Koppelfeld ausgebildet, sondern als Schaltvorrichtung. Das Ersatzschalteprotokoll ES nimmt in diesem Fall eine einfachere Form an. Die Informationen K2 beschreiben hier den Zustand der Selektionsvorrichtung. Immer dann, wenn im Falle der 1:n Struktur die Schaltvorrichtungen S₀...Sₙ gesteuert wurden, wird im Falle der 1+1 Strukur stattdessen die Selektionsvorrichtung SN gesteuert.

Alle bisher beschriebenen Ausgestaltungen der Erfindung sind bidirektional, in dem Sinne, dass sowohl Nutzdaten als auch Protokollkommunikation in beiden Richtungen stattfindet. In einer weiteren Ausgestaltung der Erfindung ist ein 1:n unidirektionaler Betrieb möglich. Hierbei werden Nutzdaten nur in einer Richtung übertragen (z. B. gemäß der Anordnung in Fig. 2a). In der Rückrichtung (vgl. Figur 2b) werden keine Nutzdaten übertragen. Allerdings muß in der Rückrichtung weiterhin die Ersatzstrecke (PE in Figur 2b) vorhanden sein, da die Protokollkommunikation (wie im bidirektionalen Fall) weiterhin benötigt wird, damit die Schaltvorrichtungen Sₒ bis Sₙ in Fig. 2a gesteuert werden können.

Ein Spezialfall der unidirektionalen 1:n Struktur ist gegeben, wenn n=1 gilt (siehe hierzu Figur 3).

Bislang wurde davon ausgegangen, daß jede MPLS-Verbindung individuell überwacht und ersatzgeschaltet wird. Ausfälle und Störungen können daher verbindungsindividuell derart berücksichtigt werden, indem bei Ausfall oder Verschlechterung der Übertragungsqualität einer einzelnen Verbindung diese ersatzgeschaltet werden kann.

In praktischen Ausführungen von Übertragungseinrichtungen dieser Art werden jedoch häufig viele Einzelverbindungen über den gleichen physikalischen Weg (z. B. eine Glasfaser) zwischen Übertragungseinrichtungen geführt. Im Falle einer Unterbrechung dieses Weges (z. B. Glasfaserbruch) sind dann alle Einzelverbindungen durch einen einzigen Ausfall betroffen. Ausfälle dieser Art überwiegen in der Praxis gegenüber Ausfällen, die nur Einzelverbindungen betreffen. Insbesondere müßten in diesem Fall für jede unterbrochene Einzelverbindung ein Ersatzschalteprotokoll in der Prioritätstabelle PL eingetragen werden.

In einer Ausgestaltung der Erfindung wird daher vorgesehen, mittels einer Gruppenersatzschaltung eine Vielzahl von Einzelverbindungen gemeinsam ersatzzuschalten.

Hierzu werden alle über denselben physikalischen Pfad geführten MPLS-Verbindungen logisch zu einer Gruppe zusammengefaßt. Ferner werden für diese Gruppe 2 Ersatzschalteverbindungen erstellt. Die erste dieser Ersatzschalteverbindungen wird über die Betriebsstrecke WE geleitet (MPLS-Ersatzschalte-LSP; LSP= Label Switched Path), womit sie über den gleichen physikalischen Weg zwischen den Label Switched Routern W und E geführt ist, wie alle zugehörigen Einzelverbindungen.Die zweite dieser Ersatzschalteverbindungen wird über die Ersatzstrecke PE eingerichtet.

Im Gruppenersatzschalteverfahren werden nun nur noch diese beiden Ersatzschalteverbindungen auf Ausfälle und Störungen in den Überwachungseinrichtungen ÜE₁, ÜE₀ überwacht. Die Einzelverbindungen werden nicht mehr überwacht. Im Falle einer Ersatzschalteanforderung wird die prioritätsgesteuerte Ersatzschalteentscheidung wie bisher in der Prioritätslogik PL getroffen. Im Ersatzschaltefall werden allerdings alle zu einer Gruppe zugehörigen Einzelverbindungen gemeinsam durch die Schaltvorrichtung SN umgeschaltet. Dabei muß nur ein einziges Ersatzschalteprotokoll über die Ersatzstrecke PE abgewickelt werden.

Vorteilhaft daran ist, daß eine Vielzahl von Einzelverbindungen durch eine einzige Ersatzschalteverbindung und ein einziges Ersatzschalteprotokoll überwacht und ersatzgeschaltet werden können, um somit auf die im praktischen Betrieb am häufigsten vorkommenden Fehlerfälle angemessen reagieren zu können. Ferner wird lediglich ein Ersatzschalteprotokoll in der Prioritätstabelle PL eingetragen.

Die Betriebs- und Ersatzstrecken WE und PE müssen vor Inbetriebnahme eingerichtet werden. Dazu müssen Verbindungen zwischen den Label Switched Routern W und E, sowie gegebenenfalls an dazwischenliegenden Übertragungseinrichtungen eingerichtet (konfiguriert) werden.

Das Einrichten dieser Verbindungen erfolgt üblicherweise per TMN (Telekommunikations-Netzmanagement), kann aber auch mittels eines MPLS-Signalisierungsprotokolles erfolgen. Hierzu wird dabei per Signalisierung der Weg der Betriebs- bzw. Ersatzstrecke festgelegt. Zusätzlich wird über das Signalisierungsprotokoll Bandbreite in den Übertragungseinrichtungen reserviert, damit die Übertragung der Informationen über die Betriebs- bzw. Ersatzstrecke sichergestellt ist.

## Patentansprüche

1. Verfahren zum Ersatzschalten von Übertragungseinrichtungen zur Übertragung von MPLS-Paketen, mit
einer sendenden und einer empfangenden Vermittlungseinrichtung (W, E), zwischen denen weitere Vermittlungseinrichtungen angeordnet sein können, und die einen aus einer Mehrzahl von Betriebsstrecken (WE₁...WEₙ) gebildeten Übertragungsabschnitt abschließen, und die Informationen über die Mehrzahl von Betriebsstrecken (WE₁...WEₙ) austauschen, sowie mit Überwachungseinrichtungen (ÜE₁...ÜEₙ), die jeweils am Ende einer Betriebsstrecke angeordnet sind und von der eine Störung der Betriebsstrecke ermittelt wird, wobei zusätzlich eine Ersatzstrecke (PE) zwischen den beiden Vermittlungseinrichtungen (W, E) vorgesehen wird, über die im Falle einer Störung auf einer der Betriebsstrecken die hierüber übertragenen Informationen nach Maßgabe von Prioritätskriterien, mittels derer beim gleichzeitigen Auftreten mehrerer Ersatzschalteanforderungen festgelegt ist, welche Betriebsstrecke ersatzzuschalten ist, sowie von den Informationen mitgegebenen Verbindungsinformationen weitergeleitet werden,
**dadurch gekennzeichnet,**
daß die Informationen in MPLS-Pakete eingebunden werden, daß zwei gegenläufige unidirektionale MPLS-Verbindungen logisch miteinander assoziiert werden, wobei die beiden gegenläufigen MPLS-Verbindungen jeweils die gleichen Vermittlungseinrichtungen verbinden.

2. Verfahren nach Anspruch 1,
**dadurch gekennzeichnet,**
daß den Betriebsstrecken (WE₁...WEₙ) sowie der Ersatzstrecke (PE) eine Priorität zugewiesen wird.

3. Verfahren nach Anspruch 1 oder 2,
**dadurch gekennzeichnet,**
daß im Ersatzschaltefall eine Ersatzschalteanforderung (K1) generiert wird, der weitere Prioritäten zugewiesen werden.

4. Verfahren nach Anspruch 1,
**dadurch gekennzeichnet**,
daß die logische Verbindungsinformation die MPLS-Verbindungsnummer (Label Value) ist.

5. Verfahren nach Anspruch 1 bis 4,
**dadurch gekennzeichnet**,
daß Prioritätstabellen (PL, PG) vorgesehen werden, in der die Prioritäten festgelegt werden.

6. Verfahren nach einem der Ansprüche 1 bis 5,
**dadurch gekennzeichnet,**
daß die Ersatzschaltung durch Ansteuern einer in der sendenden Vermittlungseinrichtung enthaltenden Schaltvorrichtung (S₀...Sₙ) sowie unter Verwendung einer in der empfangenden Vermittlungseinrichtung angeordneten Selektionseinrichtung (SN) erfolgt.

7. Verfahren nach einem der Ansprüche 1 bis 6,
**dadurch gekennzeichnet**,
daß die Selektionseinrichtung (SN) als Koppelfeld ausgebildet ist.

8. Verfahren nach einem der vorstehenden Ansprüche,
**dadurch gekennzeichnet,**
daß eine Gruppenersatzschaltung vorgesehen wird, indem alle über denselben physikalischen Pfad geführten MPLS-Verbindungen logisch zu einer Gruppe zusammengefaßt werden, und für die derart geformte Gruppe wenigstens zwei Ersatzschalteverbindungen erstellt werden, wobei jeweils eine dieser Ersatzschalteverbindungen über eine Betriebsstrecke (WE) und eine weitere dieser Ersatzschalteverbindungen über die Ersatzstrecke (PE) eingerichtet wird.

9. Verfahren nach einem der vorstehenden Ansprüche,
**dadurch gekennzeichnet,**
daß im Falle des Vorsehens einer Gruppenersatzschaltung von den Überwachungseinrichtungen (ÜE₀...ÜEₙ) lediglich die wenigstens zwei Ersatzschalteverbindungen überwacht werden.

10. Verfahren nach einem der vorstehenden Ansprüche,
**dadurch gekennzeichnet,**
daß das Einrichten der über die wenigstens eine Betriebsstrecke (WE) geführten Verbindungen sowie der über die Ersatzstrecke (PE) geführten Verbindungen durch ein MPLS Signalisierungsprotokoll erfolgt, das auch Bandbreite in den Übertragungseinrichtungen reserviert und den Weg der Betriebsstrecke(n) (WE) und der Ersatzstrecke (PE) festlegt.

11. Verfahren nach einem der vorstehenden Ansprüche,
**dadurch gekennzeichnet,**
daß über die Ersatzstrecke (PE) in betriebsstörungsfreien Zeiten Sonderdaten übertragen wird.

12. Verfahren nach einem der vorstehenden Ansprüche,
**dadurch gekennzeichnet,**
daß die Sonderdaten als niederpriorer Verkehr ausgebildet sind, der im Falle eines Ersatzschaltens des hochprioren Verkehrs automatisch verdrängt wird.

13. Verfahren nach einem der vorstehenden Ansprüche,
**dadurch gekennzeichnet,**
daß bei Eintreffen einer Ersatzschalteanforderung in der empfangenden Vermittlungseinrichtung ein Ersatzschalteprotokoll (ES) generiert wird, das lediglich einmal über die Ersatzstrecke (PE) der verbleibenden Vermittlungseinrichtung zugeführt wird.

14. Verfahren nach einem der vorstehenden Ansprüche,
**dadurch gekennzeichnet,**
daß Totalaufall und Verschlechterung einer Betriebsstrecke in der Überwachungseinrichtung der empfangenden Vermittlungseinrichtung ermittelt werden.

15. Verfahren nach einem der vorstehenden Ansprüche,
**dadurch gekennzeichnet,**
daß die Schaltvorrichtung fest einstellbar ist.

16. Verfahren nach einem der vorstehenden Ansprüche,
**dadurch gekennzeichnet,**
daß die Vermittlungseinrichtungen als Crossconnect- Schalteinrichtungen ausgebildet sind.
